# EUROPÄISCHE PATENTSCHRIFT

(11) **EP 1 787 342 B1**
(45) Veröffentlichungstag und Bekanntmachung des Hinweises auf die Patenterteilung: **15.09.2010**
(21) Anmeldenummer: 05759753.6
(22) Anmeldetag: 02.07.2005
(51) Int. Cl.: H01M 4/86, H01M 4/88

(54) **GASDIFFUSIONSELEKTRODEN, VERFAHREN ZUR HERSTELLUNG VON GASDIFFUSIONSELEKTRODEN UND BRENNSTOFFZELLEN UNTER VERWENDUNG DERARTIGER GASDIFFUSIONSELEKTRODEN**
GAS DIFFUSION ELECTRODES, METHOD FOR THE PRODUCTION OF GAS DIFFUSION ELECTRODES AND FUEL CELLS USING SAID GAS DIFFUSION ELECTRODES
ELECTRODES DE DIFFUSION GAZEUSE, PROCEDE DE PRODUCTION D'ELECTRODES DE DIFFUSION GAZEUSE ET PILES A COMBUSTIBLE UTILISANT LESDITES ELECTRODES

(30) Priorität: 08.07.2004 DE 102004032999
(43) Veröffentlichungstag der Anmeldung: 23.05.2007
(73) Patentinhaber: elcomax membranes GmbH, 81737 München (DE)
(72) Erfinder: HAUFE, Stefan, 37093 Göttingen (DE); REICHE, Annette, 37079 Göttingen (DE); KIEL, Suzana, 37073 Göttingen (DE); MÄHR, Ulrich, 14052 Berlin (DE); MELZNER, Dieter, 37075- Göttingen (DE)
(74) Vertreter: Grättinger, Günter
(86) Internationale Anmeldenummer: PCT/EP2005/007163
(87) Internationale Veröffentlichungsnummer: WO 2006/005466

(56) Entgegenhaltungen:
- EP-A- 1 320 140
- WO-A-01/18894
- US-A- 4 876 115
- US-A1- 2002 019 308

## Beschreibung

Die Erfindung betrifft Gasdiffusionselektroden mit mehreren gasdurchlässigen, elektrisch leitfähigen Schichten, ein Verfahren zur Herstellung von Gasdiffusionselektroden und Brennstoffzellen für Gebrauchstemperaturen bis mindestens 200°C mit Membran-Elektroden-Einheiten unter Verwendung derartiger Gasdiffusionselektroden.

In der US-PS 4,876,115 werden eine Gasdiffusionselektrode für Membran-Elektroden-Einheiten mit Polymerelektrolytmembranen und ein Verfahren zu ihrer Herstellung beschrieben, die in Brennstoffzellen Verwendung finden. Die Gasdiffusionselektrode besteht aus einer Gasdiffusionsschicht und einer gasdurchlässigen Katalysatorschicht, welche mit einer festen Polymerelektrolytmembran in Kontakt steht. Die gasdurchlässige Katalysatorschicht besteht aus Partikeln eines elektrisch leitfähigen Trägermaterials, auf deren Oberfläche ein Katalysatormaterial dispergiert ist. Die von den Partikeln gebildeten Zwischenräume erlauben es den Reaktionsgasen durch die Elektrodenstrulctur hindurch zu den benachbarten Katalysatoren zu penetrieren, wo die elektrochemischen Reaktionen stattfinden. Zur Kontrolle der Benetzungseigenschaften der Elektroden, zur Aufrechterhaltung der Gasdurchlässigkeit und der Erhöhung der Festigkeit sind zusätzliche Partikel vorhanden, beispielsweise aus PTFE. Außerdem ist auf die Katalysatorschicht ein protonenleitendes Material aufgesprüht, abgeschieden, oder aufgestrichen, um eine bessere Leitung der Protonen zwischen den Katalysatorteilchen und der Polymerelektrolytmembran zu gewährleisten. Als protonenleitendes Material wird Nafion^{®} und Rutheniumdioxid vorgeschlagen. Nachteilig ist, dass das aufgebrachte Nafion^{®} eine geringe Porosität und Gasdurchlässigkeit aufweist, wodurch bei zu hoher Dosierung an Nafion^{®} die Gasdurchlässigkeit der Katalysatorschicht blockiert oder zumindest erheblich herabgesetzt wird. Deshalb muß Nafion^{®} aufwendig in mehreren Schichten aufgesprüht werden. Außerdem sind die Katalysatorteilchen, die nicht an der Oberfläche der Katalysatorschicht liegen, nicht oder nur unzureichend von dem Nafion^{®} kontaktiert. In diesen Bereichen kann demnach auch keine Verbesserung der Protonenleitung erfolgen. Von weiterem Nachteil ist, dass Nafion^{®} weder als Membran noch als protonenleitender Elektrodenbeslandteil für die Gasdiffusionselektrode in Hochtemperatur-Polymerelektrolytmembran-Brennstoffzellen, die bis zu einer Betriebstemperatur von mindestens 200°C arbeiten, eingesetzt werden kann, da Nafion^{®} im Dauerbetrieb bei Temperaturen oberhalb 100°C instabil ist. Hinsichtlich der Gasdiffusionselektrode bedeutet das, einerseits Beeinträchtigungen der Gasdurchlässigkeit durch Zusammensintern der Elektrodenstruktur, und andererseits führt die Abspaltung von Sulfonsäuregruppen bei Temperaturen > 100°C zu einem Verlust der protonenleitenden Ei genschaften.

Die US 2002/0019308 A1 zeigt weitere Gasdiffusionselektroden und Brennstoffzellen zum Betrieb bei niedrigen Temperaturen, welche zum einen wiederum Nafion und zum anderen einen Komposit-Katalysator aus Katalysatorpartikeln umfassen. Die Katalysatorpartikel bestehen aus elektrisch leitfähigem Material, auf dessen Oberfläche sich ein poröses Kationenaustauschpolymer und/oder ein hydrophobes Polymer befinden. Eine Eignung der in der US 2002/0019308 A1 gezeigten Gasdiffusionselektroden zum Betrieb in einem Temperaturbereich bis 200°C besteht nicht.

Die Erweiterung des Arbeitstemperaturbereiches von Polymerelektrolytymembran-Brennstoffzellen auf Temperaturen bis mindestens 200 °C ist auf Grund der damit verbundenen Vorteile aus mehreren Gründen erwünscht. Zum einen verbessert sich die Elektrodenkinetik und der Katalysator der Anode wird wesentlich unempfindlicher gegenüber Kohlenmonoxid und anderen Katalysatorgiften. Somit kann der Aufwand für die Gasreinigung bei der Verwendung von Wasserstoff aus Reformgas deutlich reduziert werden. Weiterhin kann die Abwärme der Zelle aufgrund ihres höheren Temperaturniveaus effektiver genutzt werden.

Gemäß der WO 01/18894 A2 werden Gasdiffusionslektroden hergestellt, indem eine Paste oder Suspension eines Katalysatorpulvers in einer Lösung von Polybenzimidazol (PBI) in Dimethylacetamid (DMAc) auf eine Gasdiffusionslage aufgebracht und durch Entzug des Lösungsmittels eine feste Schicht erzeugt wird. Die Elektrodenschicht wird mit Phosphorsäure imprägniert, um durch Dotierung des Polymeren mit der Säure Protonenleitfähigkeit zu erzielen, gleichzeitig wird die Säure immobilisiert. Nachteilig ist, dass die aus einer Lösung des Polymeren in Dimethylacetamid durch Entzug des Lösungsmittels hergestellten PBI-Schichten dichte Filme darstellen. Da das Polymer in der gesamten aktiven Elektrodenschicht infolge der beschriebenen Herstellungsprozedur gleichmäßig verteilt ist, wird die Gasdurchlässigkeit der Elektrode stark herabgesetzt und die Zugänglichkeit des Katalysators für die Reaktionsgase reduziert. Gleichzeitig wird aber auch der Abtransport des Produktwassers behindert. Somit kommt das mit Phosphorsäure dotierte PBI intensiv mit dem Produktwasser in Kontakt, was zu einem Austrag von Phosphorsäure führen kann und eine Abnahme der Protonenleitfähigkeit in der Elektrode zur Folge hat.

Die Aufgabe der Erfindung besteht deshalb darin, Gasdiffusionselektroden für Brennstoffzellen mit einer verbesserten, von den Betriebsbedingungen unabhängigen Protonenleitung zwischen einem in einer Katalysatorschicht befindlichen Elektrokatalysator und einer benachbarten Polymerelektrolytmembran vorzuschlagen, die bei Betriebstemperaturen bis oberhalb des Siedepunktes von Wasser einsetzbar sind und die eine dauerhaft hohe Gasdurchlässigkeit der Katalysatorschicht gewährleisten. Weitere Aufgaben der Erfindung bestehen darin, Verfahren zur effektiven Herstellung derartiger Gasdiffusionselektroden und Brennstoffzellen für Betriebstemperaturen bis oberhalb des Siedepunktes von Wasser unter Verwendung dieser Gasdiffusionselektroden vorzuschlagen.

Die Aufgabe wird gelöst durch Gasdiffusionselektroden gemäß Anspruch 1 mit mehreren gasdurchlässigen, elektrisch leitfähigen Schichten, die mindestens aus einer Gasdiffusionsschicht und einer Katalysatorschicht bestehen. Dabei weist die Katalysatorschicht wenigstens Partikel eines elektrisch leitfähigen Trägermaterials auf. Zumindest ein Teil der Partikel trägt einen Elektrokatalysator, welcher vorzugsweise an der Oberfläche der Partikel angesiedelt ist. Wenigstes ein Teil der Partikel ist zumindest teilweise mit wenigstens einem porösen, protonenleitenden Polymeren beladen. Dieses poröse protonenleitende Polymer ist bei Temperaturen bis oberhalb des Siedepunktes von Wasser einsetzbar und bis mindestens 200°C stabil. Die Beladung der Oberfläche der Partikel des elektrisch leitfähigen Trägermaterials mit einem protonenleitenden Polymer, welches eine poröse Struktur besitzt, bietet den großen Vorteil, dass eine gute Protonenleitung zwischen dem in der Katalysatorschicht befindlichen Elektrokatalysator und einer benachbarten Polymerelektrolytmembran realisiert ist, weil bei entsprechenden Konzentrationen der beladenen Partikel die Wahrscheinlichkeit hoch ist, dass die protonenleitende Polymerschicht eines Partikel in der Katalysatorschicht unmittelbar in Berührung steht mit der protonenleitenden Polymerschicht eines benachbarten Partikels in der Katalysatorschicht beziehungsweise mit der Polymerelektrolytmembran in einer Membran-Elektroden-Einheit (MEA) einer Brennstoffzelle. Die bis mindestens 200°C stabile Porosität der protonenleitenden Polymerschicht gewährleistet nicht nur eine hohe Gasdurchlässigkeit der Katalysatorschicht, sondern auch einen ungehinderten Transport der gasförmigen Brennstoffe und Oxidationsmittel sowie der gasförmigen Reaktionsprodukte zu den Elektrokatalysatoren hin und von diesen fort. Die Porosität der protonenleitenden Polymerschicht ist mindestens im Bereich von etwa 0,001 bis 0,1 µm Porendurchmesser einstellbar. Der Anteil der Beladung der Oberfläche der Partikel und die Dicke der Beladung sind ebenfalls einstellbar. Vorzugsweise beträgt die Dicke der Partikelbschichtung 0,1 bis 10% des Partikeldurchmessers und vorzugsweise sind 50 bis 100% der Oberfläche der Partikel beladen. Dadurch, dass protonenleitende Polymere ausgewählt sind, die bei Temperaturen bis oberhalb des Siedepunktes von Wasser einsetzbar und bis mindestens 200°C mechanisch und thermisch stabil sind, können die erfindungsgemäßen Gasdiffusionselektroden in sogenannten Hochtemperatur-Brennstoffzellen eingesetzt werden, die bei Temperaturen bis oberhalb des Siedepunktes von Wasser und/oder von mindestens 200°C ohne Leistungsabfall im Dauerbetrieb arbeiten. Das wird mit darauf zurückgeführt, dass die poröse Struktur der ausgewählten protonenleitenden Polymere bei diesen Temperaturen nicht kollabiert und somit der strukturelle Aufbau der Gasdiffusionselektroden erhalten bleibt.

Unter protonenleitenden Polymeren sollen solche verstanden werden, die per se protonenleitend sind oder zur Protonenleitung befähigt sind, beispielsweise durch Aufnahme eines Dotierungsmittels, wie beispielsweise einer starken anorganischen Säure.

In einer bevorzugten Ausführungsform der Erfindung weist die Katalysatorschicht zusätzlich poröse Partikel auf, die aus mindestens dem porösen protonenleitenden Polymeren bestehen. Durch entsprechende Parameterwahl und Reaktionsführung des Phaseninversionsprozesses zur Beladung der Partikel des elektrisch leitfähigen Trägermaterials mit den porösen protonenleitenden Polymeren können derartige poröse Partikel zusammen mit diesen erzeugt werden. Sie sind aber auch gesondert herstellbar. In einer anderen vorteilhaften Ausgestaltung der Erfindung befindet sich zwischen der Katalysatorschicht und der Gasdiffusionsschicht eine zusätzliche gasverteilende Mikrostrukturschicht aus elektrisch leitfähigen Partikeln. Diese elektrisch leitfähigen Partikel bestehen vorzugsweise aus Ruß. Dadurch wird eine bessere Elektronenleitung und eine gleichmäßigere Gasverteilung in den Gasdiffusionselektroden erreicht. Die Gasdiffusionsschichten der Gasdiffusionselektroden besteht in der Regel aus Kohlenstoff, insbesondere in Form von Kohlefasern, die zu Papier, Vliesen, Gittern, Gewirken oder Geweben verarbeitet sind.

Das elektrisch leitfähige Trägermaterial der Katalysatorschicht ist ausgewählt aus der Gruppe der Metalle, Metalloxide, Metallcarbide, Kohlenstoffe oder aus Gemischen daraus. Bevorzugt ist Ruß in Partikelform unter den Kohlenstoffen ausgewählt. Als besonders geeignet haben sich solche erwiesen, die unter den Bezeichnungen Carbon Blacks, wie Vulcan XC oder Shawinigan Black und weiterhin sphärische graphitisierte Ruße oder Mesocarbon Microbeads bekannt sind.

Als Elektrokatalysatoren werden Metalle und Metalllegierungen oder Gemische davon eingesetzt. Besonders bewährt haben sich Metalle, die ausgewählt sind aus der 8. Nebengruppe des Periodensystems der Elemente. Von diesen sind Platin, Iridium und/oder Ruthenium bevorzugt. Besonders bevorzugt ist Platin. Die Beladung beträgt vorzugsweise 5 bis 40 Gew.-% Elektrokatalysator auf dem Träger. Die Katalysatorpartikel sollten eine Größe von etwa 2 bis 10 nm aufweisen.

Im Rahmen der Erfindung besteht das wenigstens eine poröse, protonenleitende Polymer aus mindestens einem Stickstoffatome enthaltenden Polymer, dessen Stickstoffatome chemisch an Zentralatomen von mehrbasigen anorganischen Oxosäuren oder deren Derivaten gebunden sind. Unter mehrbasigen anorganischen Oxosäuren (Cotton, Wilkinson, Anorganische Chemie, Verlag Chemie, Weinheim, Deerfeld Beach, Florida, Basel 1982, 4. Auflage, S. 238-239) sollen Säuren mit der allgemeinen Formel HₙXOₘ verstanden werden, bei denen n>1, m>2 und n≥m und X ein anorganisches Zentralatom ist (n und m sind ganze Zahlen). Als Zentralatom kommen Phosphor, Schwefel, Molybdän, Wolfram, Arsen, Antimon, Wismut, Selen, Germanium, Zinn, Blei, Bor, Chrom oder Silizium in Frage. Bevorzugt sind Phosphor, Molybdän, Wolfram und Silizium und besonders bevorzugt ist Phosphor.

Als Derivate der Oxosäuren sind organische Derivate in Form von Alkoxyverbindungen, Estern, Amiden und Säurechloriden bevorzugt. In einer Ausführungsform der Erfindung sind organische Derivate der Oxosäuren Di-(2-ethylhexyl)phosphorsäureester, Molybdaenyl-acetylacetonat und Tetraethoxysilan besonders bevorzugt.

Das Stickstoffatome enthaltende Polymer ist ausgewählt aus der Gruppe umfassend Polybenzimidazole, Polypyrridine, Polypyrimidine, Polyimidazole, Polybenzthiazole, Polybenzoxazole, Polyoxadiazole, Polychinoxaline, Polythiadiazole, Poly(tetrazapyrene), oder wobei das Polymer zur Ausbildung von Amidbindungen befähigte reaktive Gruppen in der Seitenkette trägt oder primäre und sekundäre Aminogruppen aufweist sowie eine Kombination von zwei oder mehreren davon oder mit anderen Polymeren.

Das erfindungsgemäß verwendete und Stickstoffatome enthaltende Polymer ist mechanisch und thermisch stabil und soltte einen Glasübergang oberhalb 200°C aufweisen.

Die genannten protonenleitenden Polymere, welche kovalent gebundene Einheiten von Oxosäuren enthalten, verfügen per se nicht über ausreichende protonenleitende Eigenschaften, die für eine Verwendung in Gasdiffusionselektroden ausreichend wäre. Überraschenderweise hat es sich aber gezeigt, dass diese Polymere in hervorragender Weise Dotierungsmittel, wie beispielsweise Phosphorsäure, aufnehmen und fixieren können. Das Dotierungsmittel bleibt dabei nicht nur bei Temperaturen bis mindestens 200°C, sondern auch bei Temperaturen unter 100°C, so stark in den erfindungsgemäß verwendeten Polymeren fixiert, dass es selbst im An- und Abfahrbereich von Brennstoffzellen nicht aus den Gasdiffusionselektroden ausgetragen wird. Darüber hinaus besitzen die protonenleitenden Polymere eine höhere Hydrophobizität im Vergleich zu konventionellen Polybenzimidazolen, was bedeutet, dass sie das Produktwasser der Brennstoffzelle nicht aufnehmen, wodurch der Austrag von Phosphorsäure verhindert, bzw. zumindest stark reduziert wird.

Von Vorteil ist, dass das wenigstens eine protonenleitende Polymer in seiner Affinität gegenüber Wasser eingestellt werden kann über Art und Anzahl hydrophiler und hydrophober Gruppen, die man in die Polymeren und/oder in die Derivate der Oxosäuren einführt. Derartige Reaktionen sind dem Fachmann geläufig.

Als vorteilhaft hat sich gezeigt, wenn das mindestens eine protonenleitende Polymer und das Zentralatom der Oxosäure beziehungsweise des Oxosäurederivates zu einem Netzwerk vernetzt sind. Die vernetzte Polymerbeschichtung besitzt eine erhöhte mechanische Stabilität und stabilisiert die damit beschichteten Partikel und die mit diesen Partikeln gebildete Struktur. Weiterhin ist die vernetze Polymerbeschichtung besonders gut zur Aufnahme von Dotierungsmitteln, wie beispielsweise Phosphorsäure, unter Ausbildung hervorragender protonenleitender Eigenschaften befähigt. Dabei ist das Netzwerk mindestens zweidimensional ausgebildet, vorzugsweise jedoch dreidimensional, insbesondere bei einem geringen Anteil der Oxosäureeinheiten in Bezug auf das Polymer. Für den Einsatz in den Gasdiffusionselektroden besonders gut geeignete protonenleitende Polymere weisen einen Vernetzungsgrad von mindestens 70 % des Polymers auf, vorzugsweise von mehr als 80%, besonders bevorzugt von mehr als 90 %.

Es kann vorteilhaft sein, wenn die Partikel des elektrisch leitfähigen Trägermaterials mit verschiedenen porösen, protonenleitenden Polymeren beladen sind. In einer besonderen Ausführungsform der Erfindung ist der Teil der Partikel des elektrisch leitfähigen Trägermaterials, der einen Elektrokatalysator trägt, mit einem anderen porösen, protonenleitenden Polymeren beladen als der Teil der Partikel ohne Elektrokatalysator. Die Beschichtung des den Katalysator enthaltenden Trägermaterials besitzt durch das verwendete kovalent gebundene Oxosäurederivat selbst katalytische Aktivität oder unterstützt den Elektrokatalysator in seiner Funktion.

Erfindungsgemäße Gasdiffusionselektroden können in der Katalysatorschicht zusätzlich Additive enthalten. Zu solchen Additiven zählen beispielsweise Bindemittel wie Perfluorpolymere oder Partikel von strukturfördernden Additiven, wie sphärische Partikel auf Kohlenstoffbasis.

Die Aufgabe der Erfindung wird weiter gelöst durch ein Verfahren gemäß Anspruch 25 zur Herstellung von Gasdiffusionselektroden mit mehreren gasdurchlässigen, elektrisch leitfähigen Schichten, die mindestens aus einer Gasdiffusionsschicht und einer Katalysatorschicht bestehen, wobei die Katalysatorschicht wenigstens Partikel eines elektrisch leitfähigen Trägermaterials aufweist, und wenigstens ein Teil der Partikel einen Elektrokatalysator trägt und zumindest teilweise mit wenigstens einem porösen, protonenleitenden Polymeren beladen ist und dieses Polymer bei Temperaturen bis 200°C stabil ist. Bei dem erfindungsgemäßen Verfahren werden die folgenden Schritte durchgeführt:
A) Die Oberfläche von wenigstens dem einen Teil der Partikel des elektrisch leitfähigen Trägermaterials wird zumindest teilweise beladen mit wenigstens dem einen protonenleitenden Polymer. Dazu werden die Partikel in einer Flüssigkeit suspendiert, in welcher das wenigstens eine protonenleitenden Polymer gelöst ist. Die Suspension wird sukzessive in ein bewegtes Nichtlösemittel für das Polymer eingetragen, wobei eine Phaseninversion ausgelöst wird unter Ausbilden einer porösen Polymerstruktur an der Oberfläche der Partikel des Trägermaterials und von porösen Partikeln aus dem wenigstens einen protonenleitenden Polymer;
B) Bereitstellen mindestens des partikulären, elektrisch leitfähigen Trägermaterials für die Katalysatorschicht, bei dem wenigstens ein Teil der Partikel einen Elektrokatalysator trägt und/oder zumindest teilweise mit wenigstens dem porösen, protonenleitenden Polymeren gemäß Schritt A) beladen ist;
C) Ausformen der Katalysatorschicht in eine Elektrodenform und
D) Kontaktieren der ausgeformten Katalysatorschicht mit einer der Seiten der Gasdiffusionsschicht.

Als Flüssigkeiten kommen Mittel in Frage, in denen sich die Polymere lösen. Vorzugsweise werden N-Methylpyrrolidon (NMP), Dimethylformamid (DMF), Dimethylsufoxid (DMSO), Dimethylacetamid (DMAc) und Gemische davon verwendet. DMAc wird bevorzugt eingesetzt.

Die Konzentration des mindestens einen Polymeren in der Suspension liegt im Bereich von 0,05 bis 5 Gew.-%, besonders bevorzugt von 0,1 und 1 Gew.-%. Der Gehalt an den Partikeln des elektrisch leitfähigen Trägermaterials in der Suspension wird eingestellt im Bereich von 5 bis 30 Gew.-% und besonders bevorzugt von 10 und 15 Gew.-%. Auf die Menge an elektrisch leitfähigem Trägermaterial in der Suspension kommen somit zwischen etwa 0,1 und 10 Gew.-% Polymer, besonders bevorzugt im Bereich von 0,5 und 2 Gew.-%. Das Verhältnis zwischen Trägermaterial und Polymer ist abhängig von der gewünschten Polymerschichtdicke, die auf den Partikeln des Trägermaterials erzeugt werden soll. In einer bevorzugten Ausführungsform enthält die Suspension darüber hinaus das neutralisierte Derivat einer Oxosäure in einer Konzentration im Bereich von 0,01 und 0,5 Gew.-%, besonders bevorzugt von 0,1 und 0,3 Gew.-%. Auf die Menge des Polymeren in der Suspension kommen somit zwischen etwa 10 und 400 Gew.-% Oxosäurederivat, besonders bevorzugt im Bereich von 200 und 350 Gew.-%.

Das Verhältnis zwischen Polymer und Oxosäurederivat ist abhängig vom Reaktionsvermögen von Polymer und Oxosäurederivat. In einer weiteren Ausführungsform enthält die Suspension zusätzliche Vernetzermoleküle bzw. einen Katalysator. Die Konzentration der zusätzlichen Vernetzermoleküle beträgt zwischen etwa 1 bis 10 Gew.-% bezogen auf das Polymer, besonders bevorzugt ist ein Bereich von 2 bis 5 Gew.-%. Die Konzentration des Katalysators liegt im Bereich von 0,1 und 5 Gew.-% bezogen auf das Polymer, besonders bevorzugt im Bereich von 0,5 und 2 Gew.%. In einer weiteren Ausführungsform enthält die Suspension porenbildende Additive.

Die Suspension wird durch sukzessives Zugeben des elektrisch leitfähigen Trägermaterials und der teilweise im Lösungsmittel gelösten Rezepturbestandteile zur Polymerlösung hergestellt und etwa 30 Minuten vorzugsweise bei Raumtemperatur gerührt.

Als Nichtlösemittel wird vorzugsweise Wasser eingesetzt. Das Nichtlösemittel kann aber auch Additive enthalten, die Partikelbildung und Porenbildung während des Phaseninversionsprozesses beeinflussen. Beim Eintragen der Suspension in das Nichtlösemittel wird letzteres intensiv gerührt, um eine hohe Verteilung der Suspensionsbestandteile zu erreichen und ein Verkleben der Teilchen zu verhindern. Die Suspension wird vorzugsweise bei Raumtemperatur in das Nichtlösemittel eingetragen. Vorzugsweise wird das Produkt aus Suspension und Nichtlösemittel etwa eine Stunde bei Temperaturen im Bereich von 50 und 100°C, vorzugsweise 80 und 95°C gerührt. Zur Herstellung eines Pulvers wird dem erfindungsgemäßen Verfahren ein Trocknungsschritt angeschlossen. Die Trocknung erfolgt mittels eines dem Fachmann geläufigen Verfahrens zur Pulvertrocknung, im einfachsten Fall bei Temperaturen im Bereich von 50 und 200°C, besonders bevorzugt bei Temperaturen im Bereich von 80 und 150°C über einen Zeitraum von etwa 24 Stunden im Trockenschrank. Die Pulvertrocknung kann aber auch durch Gefriertrocknung erfolgen, um ein besonders feinkörniges Pulver zu erzielen.

Der Durchmesser der Poren in der protonenleitenden Polymerschicht wird im Bereich von etwa 1nm bis 1µm eingestellt, in dem bestimmte Parameter des die Schichten erzeugenden Phaseninversionsprozesses, wie Konzentration des Polymers in der Suspension, Art des verwendeten Oxosäurederivates, Zugabe von Porenbildnern und Zusammensetzung des Fällbades verändert werden. Der Anteil der Beladung der Oberfläche der Partikel und die Dicke der Beladung können insbesondere über die Konzentration des protonenleitenden Polymers in der Suspension, aus der die poröse Polymerschicht in dem Phaseninversionsprozeß erzeugt wird, eingestellt werden. Die Schichtdicke des Polymers, mit dem die Partikel beladen werden, beträgt weniger als 1µm. Überraschenderweise hat sich gezeigt, dass bei Durchführung des erfindungsgemäßen Verfahrens die mit dem wenigstens einen protonenleitenden Polymer beladenen Partikel nicht verkleben und als separate Partikel erhalten bleiben, wie auch aus REM-Aufnahmen hervorgeht.

Durch Bereitstellen von mit protonenleitenden Polymeren beschichteten und unbeschichteten Partikeln des elektrisch leitfähigen Trägermaterials kann der Elektrokatalysator derart in der Katalysatorschicht der Gasdiffusionselektrode verteilt werden, dass der Elektrokatalysator zwar protonenleitend mit der Polyelektrolytmembran verbunden wird, jedoch nicht mit dem protonenleitenden Polymer so umfassend beschichtet wird, dass er in seiner Funktion beeinträchtigt wird.

In einer bevorzugten Ausführungsform des erfindungsgemäßen Verfahrens werden dem bereitgestellten Trägermaterial vor Durchführen von Schritt C) Additive hinzugefügt. Als Additive kommen Bindemittel, wie Perfluorpolymere sowie strukturbildende Additive, wie zusätzliche sphärische Kohlenstoffpartikel oder Porenbildner in Frage.

Wenn das partikuläre, elektrisch leitfähige Trägermaterial für die Katalysatorschicht als Pulver verwendet wird, kann das Ausformen der Katalysatorschicht in die Elektrodenform vorzugsweise durch Walzen des Pulvers erfolgen. Im Vergleich zur Verwendung von unbeschichtetem elektrisch leitfähigen Trägermaterials ist der Einsatz des erfmdungsgemäßen polymerbeschichteten Trägermaterials vorteilhaft, da er zu einer deutlichen Verbesserung der mechanischen Stabilität des ausgeformten Elektrodenbandes führt. Wenn das partikuläre, elektrisch leitfähige Trägermaterial für die Katalysatorschicht als Suspension oder Paste verwendet wird, erfolgt das Ausformen der Katalysatorschicht in die Elektrodenform vorzugsweise durch Aufbringen der Suspension oder der Paste auf wenigstens eine Unterlage und anschließendes Trocknen. Wiederum ist der Einsatz des erfindungsgemäßen polymerbeschichteten Trägermaterials vorteilhaft, da dieses deutlich besser suspendierbar ist als unbeschichtetes Trägermaterial.

In beiden prinzipiellen Ausführungsformen zum Ausformen der Katalysatorschicht können sowohl die Gasdiffusionsschicht als auch die Membran als Unterlage verwendet werden. Im ersten Fall erfolgt die Kontaktierung der Katalysatorschicht mit der Gasdiffusionsschicht (D) während der Ausformung der Katalysatorschicht. Im zweiten Fall wird gemäß (D) die auf der Membran befindliche Katalysatorschicht mit der Gasdiffusionslage kontaktiert.

In einer besonderen Ausführungsform kann die ausgeformte Katalysatorschicht allein, oder der Verbund aus Katalysatorschicht und Gasdiffusionsschicht vor der weiteren Verwendung nochmals temperiert werden, um den Verbund zu stabilisieren oder Porenbildner auszuheizen. Es hat sich bewährt, wenn auf die Seite der Gasdiffusionsschicht, die mit der Katalysatorschicht in Kontakt gebracht wird, eine zusätzliche gasverteilende Mikrostrukturschicht aus elektrisch leitfähigen Partikeln aufgebracht wird.

Im Rahmen des erfindungsgemäßen Verfahrens werden als protonenleitende Polymere in Schritt (A) solche Polymere eingesetzt, die aus mindestens einem Stickstoffatome enthaltenden Polymer bestehen, deren Stickstoffatome chemisch an Zentralatomen von mehrbasigen anorganischen Oxosäuren oder deren Derivate gebunden sind. In einer bevorzugten Ausführungsform erfolgt die Reaktion zwischen dem Polymer und der Oxosäure bzw. deren Derivat während des Ablaufs von Schritt A.

Als Stickstoffatome enthaltende Polymere werden solche Polymere verwendet, die ausgewählt werden aus der Gruppe umfassend Polybenzimidazol (PBI), Polypyrridin, Polypyrimidin, Polyimidazole, Polybenzthiazole, Polybenzoxazole, Polyoxadiazole, Polychinoxaline, Polythiadiazole, Poly(tetrazapyrene), oder wobei die Polymere zur Ausbildung von Amidbindungen befähigte reaktive Gruppen in der Seitenkette tragen oder primäre und sekundäre Aminogruppen aufweisen sowie eine Kombination von zwei oder mehreren davon oder mit anderen Polymeren. In einer weiteren bevorzugten Ausführungsform der Erfindung werden Oxosäuren oder deren Derivate verwendet, deren Zentralatom aus Phosphor, Schwefel, Molybdän, Wolfram, Arsen, Antimon, Wismut, Selen, Germanium, Zinn, Blei, Bor, Chrom und/oder Silizium besteht. Dabei werden als Derivate der Oxosäuren organische Derivate in Form von Alkoxyverbindungen, Estern, Amiden und Säurechloriden bevorzugt. Besonders bevorzugt werden 2-(Diethylhexyl)phosphorsäureester, Molybdaenyl-acetylacetonat und Tetraethoxysilan verwendet. Der Anteil der organischen Derivate der Oxosäuren wird eingestellt in einem Bereich von 10 bis 400 Gew.% , besonders bevorzugt in einem Bereich von 200 und 350 Gew.-%, bezogen auf den Gehalt an dem Stickstoffatome enthaltenden Polymer.

In einer Ausführungsform des erfindungsgemäßen Verfahrens werden die Partikel des Trägermaterials mit einem Polymer aus PBI und 2-(Diethylhexyl)phosphorsäureester beladen. Dabei wird ein PBI ausgewählt, dessen Lösung von 1 Gew.-% in DMAc eine intrinsische Viskosität beziehungsweise Grenzviskosität bei 25°C von 0,90 dl/g oder höher aufweist. Aus der intrinsischen Viskosität ergibt sich mit Hilfe der Mark-Houwink-Beziehung eine mittlere Molmasse von 60.000 g/mol und höher. Generell wird erfindungsgemäß ein PBI mit Molmassen im Bereich von 35.000 bis 100.000 g/mol verwendet.

Besonders stabile Gasdiffusionselektroden werden erzielt, wenn das mindestens eine protonenleitende Polymer und das Oxosäurederivat durch Wärmeeinwirkung zu einem Netzwerk vernetzt werden. In einer bevorzugten Ausführungsform wird das polymerbeschichtete elektrisch leitende Trägermaterial nach Durchführung des Phaseninversionsprozesses und anschließender Pulvertrocknung bei Temperaturen im Bereich von 100 bis 300°C, bevorzugt im Bereich von 150 bis 250°C etwa 1 Stunde ausgehärtet, um die Vernetzung des Polymeren mit dem Oxosäurederivat zu vervollständigen. Abhängig vom verwendeten Polymer und Oxosäurederivat sowie der Tempertemperatur kann es erforderlich sein, den Temperprozeß auf bis zu etwa 5 Stunden auszudehnen. Die mechanische Stabilität der Polymerbeschichtung auf den Partikeln des elektrisch leitfähigen Trägermaterials kann über die Art des zum Einsatz kommenden Oxosäurederivates und seine Konzentration beeinflusst werden. Vorteilhafterweise wird das wenigstens eine protonenleitende Polymer in seiner Affinität gegenüber Wasser über Art und Anzahl hydrophiler und hydrophober Gruppen an den Polymeren und/oder an den Derivaten der Oxosäuren eingestellt.

Die Aufgabe der Erfindung wird weiter durch Brennstoffzellen gemäß Anspruch 38 gelöst, die aus mindestens einer Membran-Elektroden-Einheit (MEA) bestehen, welche aus zwei flächigen erfindungsgemäßen Gasdiffusionselektroden und einer sandwichartig dazwischen angeordneten Membran zusammengefügt sind sowie aus einem Dotierungsmittel für die Membran. Die erfindungsgemäßen Gasdiffusionselektroden weisen mehrere gasdurchlässige, elektrisch leitfähige Schichten auf, die mindestens aus einer Gasdiffusionsschicht und einer Katalysatorschicht bestehen, wobei die Katalysatorschicht wenigstens Partikel eines elektrisch leitfähigen Trägermaterials aufweist, und wenigstens ein Teil der Partikel einen Elektrokatalysator trägt und zumindest teilweise mit wenigstens einem porösen, protonenleitenden Polymeren beladen ist und dieses Polymer bei Temperaturen bis oberhalb des Siedepunktes von Wasser einsetzbar ist und bis mindestens 200°C stabil ist.

Die Gasdiffusionselektroden sind derart mit dem Dotierungsmittel beladen, dass sie ein Dotierungsmittelreservoir für die Membran darstellen, wobei die Membran durch Aufnahme des Dotierungsmittels bei Einwirkung von Druck und Temperatur protonenleitend geworden ist und protonenleitend an die Gasverteilungselektroden angebunden ist. Alternativ ist es auch möglich, die Membranen vor dem Zusammenfügen zur MEA direkt mit dem Dotierungsmittel zu tränken. Als Dotierungsmittel wird vorzugsweise Phosphorsäure verwendet. Die Brennstoffzelle kann bei Betriebstemperaturen zwischen Raumtemperatur und bis oberhalb des Siedepunktes von Wasser und bis mindestens 200 °C im Wasserstoff/Luft-Betrieb betrieben werden. In einer bevorzugten Ausführungsform der erfindungsgemäßen Brennstoffzellen weisen die Gasdiffusionselektroden und die Polymerelektrolytmembran der MEA das gleiche mindestens eine protonenleitende Polymer auf.

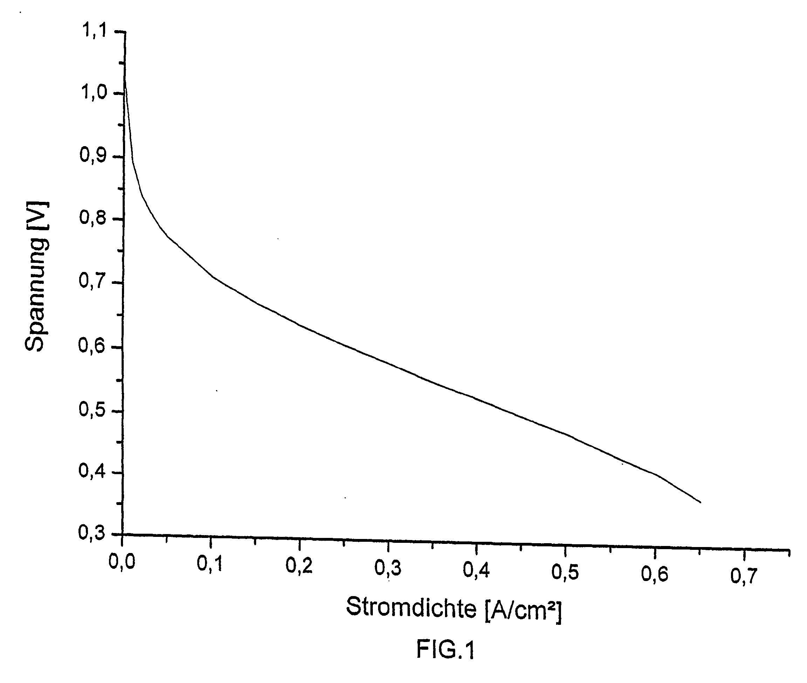

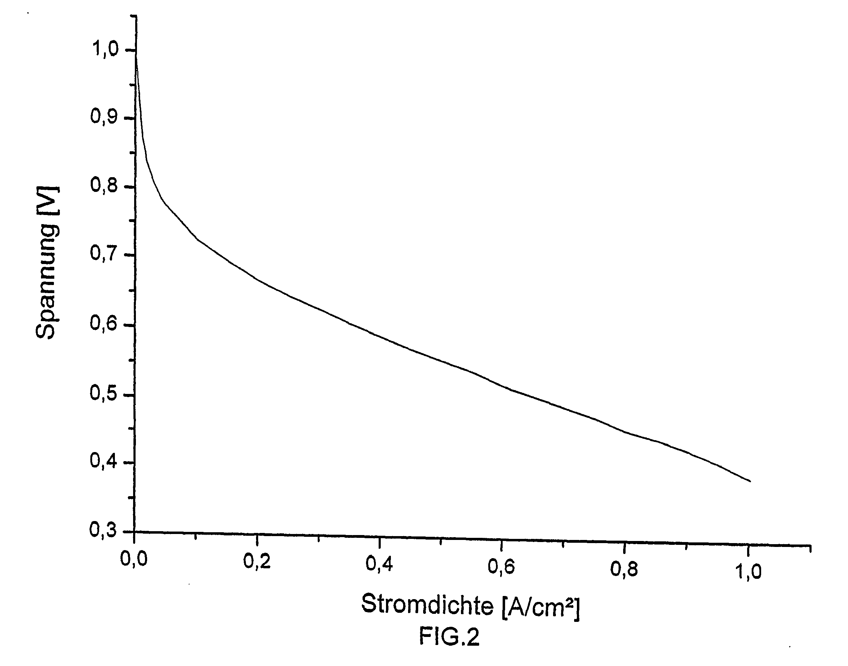

Die Erfindung soll nun an Hand der Figuren 1 und 2 und der Beispiele 1 bis 8 näher beschrieben werden. Dabei zeigen
Fig. 1 den Verlauf einer Strom-Spannungskurve für eine Ausführungsform einer erfindungsgemäßen Brennstoffzelle und
Fig. 2 den Verlauf einer Strom-Spannungskurve für eine weitere Ausführungsform einer erfindungsgemäßen Brennstoffzelle.

### Beispiel 1

### Herstellen von mit wenigstens einem prösen protonenleitenden Polymer beladenen Partikeln eines elektrisch leitfähigen Trägermaterials für die Katalysatorschicht.

Zu 102,1 ml einer 0,5 Gew.-%igen Lösung von PBI in DMAc werden unter Rühren nacheinander hinzugefügt: 10 g einer 0,2 Gew.-%igen Lösung von 1,4-Butandioldiglycidylether in DMAc und 10,1 g einer 1 Gew.-%igen Lösung von Di-(2-ethylhexyl)phosphorsäureester in DMAc. In diese Lösung werden unter Rühren 250 g einer 50 Gew.-%igen Suspension (Aufschlämmung) an Katalysatorruß in DMAc eingetragen. Der Katalysatorruß besteht aus Shawinigan Black der Firma Cabot-SMP beladen mit 20% Platin. Diese Suspension wird ca. 30 min bei Raumtemperatur gerührt und anschließend unter kräftigem Rühren in 3 Liter destilliertes Wasser eingetropft. Nach Abschluß des Phaseninversionsprozesses wird die entstehende Suspension (Aufschlämmung), wiederum unter Rühren, für ca. 1 Stunde auf 100°C erhitzt, dann gerührt auf ca. 50°C abgekühlt und filtriert. Das Filtrat wird bei 100°C über Nacht im Trockenschrank getrocknet und anschließend durch ein Sieb mit 50 µm Maschengröße gegeben. Die nunmehr mit einem porösen PBI beschichteten Partikel werden bei 200°C für eine Stunde im Trockenschrank unter Inertgasatmosphäre getempert.

### Beispiel 2

### Herstellen von mit wenigstens einem prösen protonenleitenden Polymer beladenen Partikeln eines elektrisch leitfähigen Trägermaterials für die Katalysatorschicht.

Zu 102,1 ml einer 0,5 Gew.-%igen Lösung von PBI in DMAc werden unter Rühren nacheinander zugefügt: 10 g einer 0,2 Gew.%igen Lösung von 1,4-Butandioldiglycidylether in DMAc und 10,1 g einer 1 Gew.%igen Lösung von Di-(2-ethylhexyl)phosphohrsäureester in DMAc. In diese Lösung werden unter Rühren 250 g einer 50 Gew.-%igen Suspension (Aufschlämmung) an Vulcan XC 72 der Firma More Energy (Ruß) in DMAc eingetragen. Diese Suspension wird ca. 30 Minuten bei Raumtemperatur gerührt und anschließend unter kräftigem Rühren in 3 Liter destilliertes Wasser eingetropft. Nach Abschluß des Phaseninversionsprozesses wird die entstehende Suspension (Aufschlämmung), wiederum unter Rühren, für ca. 1 Stunde auf 100°C erhitzt, dann gerührt auf ca. 50°C abgekühlt und filtriert. Das Filtrat wird bei 100°C über Nacht im Trockenschrank getrocknet und anschließend durch ein Sieb mit 50 µm Maschengröße gegeben. Der nunmehr mit einem porösen PBI beschichtete Ruß wird bei 200°C für eine Stunde im Trockenschrank unter Inertgasatmosphäre getempert.

### Beispiel 3

### Herstellen von Gasdiffusionselektroden mit einem nach Beispiel 1 gewonnen elektrisch leitfähigen Trägermaterial durch ein Suspensionsverfahren.

4,3 g des nach Beispiel 1 hergestellten polymerbeschichteten Trägermaterials werden in 62,6 g DMAc mit Hilfe einer Rührvorrichtung vom Typ UltraTurrax (IKA) 20 Minuten suspendiert. In diese Suspension werden 1,6 g einer 62 Gew.-%igen Suspension an PTFE-Partikeln (Dyneon TF 5235 PTFE) in DMAc gegeben und wiederum mit Hilfe des UltraTurrax (IKA) wiederum 20 Minuten suspendiert. Die fertige Suspension wird mittels eines Airbrushs auf eine 250 µm dicke Gasdiffusionsschicht vom Typ FC X0026 der Firma Freudenberg gesprüht. Die mit der Katalysatorschicht beschichtete Gasdiffusionsschicht wird bei 120°C im N₂-Strom 30 Minuten lang getrocknet. Die fertige Gasdiffusionselektrode hat eine Gesamtdicke von 420 µm und einen Platinanteil von 2,8 mg/cm².

### Beispiel 4

### Herstellen von Gasdiffusionselektroden mit einem nach Beispiel 2 gewonnen elektrisch leitfähigen Trägermaterial durch ein Suspensionsverfahren.

2,5 g des nach Beispiel 2 hergestellten polymerbeschichteten Trägermaterials aus Ruß werden zusammen mit 5 g eines elektrisch leitfähigen Trägermaterials bestehend aus Shawinigan Black der Firma Cabot-SMP beladen mit 30 Gew.-% Platin mittels einer Rührvorrichtung des Typs UltraTurrax (IKA) in 63,8 g DMAc suspendiert. In diese Suspension werden 2,1 g einer 62 Gew.-%igen PTFE-Suspension (Dyneon TF 5235 PTFE) in DMAc gegeben und wiederum mit Hilfe des UltraTurrax (IKA) suspendiert. Die fertige Suspension wird mittels eines Airbrushs auf eine 250 µm dicke Gasdiffusionsschicht vom Typ FC X0026 der Firma Freudenberg gesprüht. Die mit der Katalysatorschicht beschichtete Gasdiffusionsschicht wird bei 120°C im N₂-Strom 30 Minuten lang getrocknet. Die fertige Gasdiffusionselektrode hat eine Gesamtdicke von 520 µm und einen Platinanteil von 1,3 mg/cm².

### Beispiel 5

### Herstellen von Membran-Elektroden-Einheiten (MEA) mit den Gasdiffusionselektroden aus Beispiel 3

Für die Herstellung einer MEA werden aus den Gasdiffusionselektroden nach Beispiel 3 zwei 10 cm² große quadratische Stücke gestanzt und mit 13 mg konzentrierter Phosphorsäure imprägniert. Die beiden mit Phosphorsäure imprägnierten Gasdiffusionselektroden werden über ihre Katalysatorschicht mittig auf ein 56,25 cm² großes quadratisches Stück einer 35 µm dicken Polymerelektrolytmembran aus PBI aufgebracht. Der Membran-Elektroden-Sandwich wird über 2 Stunden bei 160°C mit einer Anpresskraft von 3 kN zu einer MEA verpresst. Die erhaltene MEA ist in Brennstoffzellen einbaufähig.

### Beispiel 6

### Herstellen von Membran-Elektroden-Einheiten (MEA) mit den Gasdiffusionselektroden aus Beispiel 4

Für die Herstellung einer MEA werden aus den Gasdiffusionselektroden nach Beispiel 4 zwei 10 cm² große quadratische Stücke gestanzt und mit 17 mg konzentrierter Phosphorsäure imprägniert. Die mit Phosphorsäure imprägnierten Gasdiffusionselektroden werden über ihre Katalysatorschicht mittig auf ein 56,25 cm² großes quadratisches Stück einer 35 µm dicken Polyelektrolytmembran aus PBI aufgebracht. Der Membran-Elektroden-Sandwich wird über 2 Stunden bei 160°C mit einer Anpresskraft von 3 kN zu einer MEA verpresst. Die erhaltene MEA ist in Brennstoffzellen einbaufähig.

### Beispiel 7

### Bestimmen der Leistungsparameter einer Brennstoffzelle mit einer nach Beispiel 5 hergestellten MEA.

Die nach Beispiel 5 hergestellte MEA wird in eine Testbrennstoffzelle der Firma Fuel Cell Technology, Inc. eingebaut und mit einem Anpressdruck von 15 bar verschlossen. In Abb. 1 ist der Verlauf einer Strom-Spannungskurve für die Brennstoffzelle bei einer Betriebstemperatur von 160°C aufgezeigt. Der Gasfluss für H₂ betrug 180 sml/min und für Luft 580 sml/min. Es wurden unbefeuchtete Gase verwendet. Die Leistungsparameter wurden an einem FCATS Advanced Screener der Firma Hydrogenics, Inc. ermittelt. Als maximale Leistung bei 4 bar absolut wurde 0,25 W/cm² bei einer Stromdichte von 0,6 A/cm² gemessen. Die Zellimpedanz betrug 0,5 Ωcm².

### Beispiel 8

### Bestimmen der Leistungsparameter einer Brennstoffzelle mit einer nach Beispiel 6 hergestellten MEA.

Die nach Beispiel 6 hergestellte MEA wird in eine Testbrennstoffzelle der Firma Fuel Cell Technology, Inc. eingebaut und mit einem Anpressdruck von 15 bar verschlossen.

In Abb. 2 ist der Verlauf einer Strom-Spannungskurve für die Brennstoffzelle bei einer Arbeitstemperatur von 160°C aufgezeigt. Der Gasfluss für H₂ betrug 180 sml/min und für Luft 580 sml/min. Es wurden unbefeuchtete Gase verwendet. Die Leistungsparameter wurden an einem FCATS Advanced Screener der Firma Hydrogenics, Inc. ermittelt. Als maximale Leistung bei 4 bar absolut wurden 0,39 W/cm² bei einer Stromdichte von 0,95 A/cm² gemessen. Die Zellimpedanz betrug 0,3 Ωcm².

## Patentansprüche

1. Gasdiffusionselektroden mit mehreren gasdurchlässigen, elektrisch leitfähigen Schichten, die mindestens aus einer Grasdiffusionsschicht und einer Katalysatorschicht bestehen, wobei die Katalysatorschicht wenigstens Partikel eines elektrisch leitfähigen Trägermaterials aufweist, wobei wenigstens ein Teil der Partikel einen Elektrokatalysator trägt und wobei wenigstens ein Teil der Partikel mit wenigstens einem porösen, protonenleitenden Polymer beladen ist,
**dadurch gekennzeichnet,**
**dass** das wenigstens eine poröse, protonenleitende Polymer aus mindestens einem Stickstoffatome enthaltenden Polymer besteht, dessen Stickstoffatome chemisch an Zentralatomen von mehrbasigen anorganischen Oxosäuren oder deren Derivaten gebunden sind, wobei das Stickstoffatome enthaltende Polymer ausgewählt ist aus der Gruppe umfassend Polybenzimidazole, Polypyrridine, Polypyrimidine, Polyimidazole, Polybenzthiazole, Polybenzoxazole, Polyoxadiazole, Polychinoxaline, Polythiadiazole, Poly(tetrazapyrene), oder wobei das Polymer zur Ausbildung von Amidbindungen befähigte reaktive Gruppen in der Seitenkette trägt oder primäre und sekundäre Aminogruppen aufweist sowie eine Kombination von zwei oder mehreren davon oder mit anderen Polymeren,
**dass** die protonenleitende Polymerschicht Porendurchmesser im Bereich von etwa 1nm bis 1µm aufweist und
**dass** das protonenleitende Polymer bei Temperaturen bis 200 °C thermisch und mechanisch stabil ist.

2. Gasdiffusionselektroden nach Anspruch 1, wobei die Katalysatorschicht poröse Partikel aus mindestens dem einen protonenleitenden Polymer aufweist.

3. Gasdiffusionselektroden nach Anspruch 1, wobei zwischen der Katalysatorschicht und der Gasdiffusionsschicht eine zusätzliche gasverteilende Mikrostrukturschicht aus elektrisch leitfähigen Partikeln eingebracht ist.

4. Gasdiffusionselektroden nach Anspruch 3, wobei die elektrisch leitfähigen Partikel aus Ruß bestehen.

5. Gasdiffusionselektroden nach Anspruch 1, wobei die Gasdiffusionsschicht aus Kohlenstoff besteht.

6. Gasdiffusionselektroden nach Anspruch 5, wobei die Gasdiffusionsschicht die Form eines Papiers, Vlieses, Gitters, Gewirkes oder Gewebes besitzt.

7. Gasdiffusionselektroden nach Anspruch 1, wobei das elektrisch leitfähige Trägermaterial der Katalysatorschicht ausgewählt ist aus der Gruppe der Metalle, Metalloxide, Metallcarbide, Kohlenstoffe oder aus Gemischen daraus.

8. Gasdiffusionselektroden nach Anspruch 7, wobei Ruß unter den Kohlenstoffen ausgewählt ist.

9. Gasdiffusionselektroden nach Anspruch 1, wobei der Elektrokatalysator ausgewählt ist aus der Gruppe von Metallen und Metalllegierungen.

10. Gasdiffusionselektroden nach Anspruch 9, wobei die Metalle ausgewählt sind aus der 8. Nebengruppe im Periodensystem der Elemente.

11. Gasdiffusionselektroden nach Anspruch 10, wobei die Metalle Platin und/oder Ruthenium sind.

12. Gasdiffusionselektroden nach Anspruch 1, wobei das Zentralatom der Oxosäuren oder deren Derivate Phosphor, Schwefel, Molybdän, Wolfram, Arsen, Antimon, Wismut, Selen, Germanium, Zinn, Blei, Bor, Chrom und/oder Silizium ist.

13. Gasdiffusionselektroden nach Anspruch 12, wobei die Derivate der Oxosäuren organische Derivate in Form von Alkoxyverbindungen, Estern, Amiden und Säurechloriden sind.

14. Gasdiffusionselektroden nach Anspruch 13, wobei die organischen Derivate der Oxosäure 2-(Diethylhexyl)phosphat, Molybdaenyl-acetylacetonat und Tetraethoxysilan sind.

15. Gasdiffusionselektroden nach einem der Ansprüche 1 und 12 bis 14, wobei das mindestens eine protonenleitende Polymer und das Oxosäurederivat zu einem Netzwerk vernetzt sind.

16. Gasdiffusionselektroden nach Anspruch 1, wobei das wenigstens eine poröse, protonenleitende Polymer mit anorganischen Säuren dotierbar ist.

17. Gasdiffusionselektroden nach Anspruch 16, wobei das Dotierungsmittel Phosphorsäure ist.

18. Gasdiffusionselektrode nach einem der Ansprüche 1 und 12 bis 17, wobei das wenigstens eine protonenleitende Polymer eine einstellbare Affinität gegenüber Wasser aufweist, die über Art und Anzahl einführbarer hydrophiler und hydrophober Gruppen an den Polymeren und/oder an den Derivaten der Oxosäuren realisierbar ist.

19. Gasdiffusionselektrode nach Anspruch 1, wobei die Partikel des elektrisch leitfähigen Trägermaterials mit verschiedenen porösen, protonenleitenden Polymeren beladen sind.

20. Gasdiffusionselektrode nach Anspruch 1, wobei der Teil der Partikel des elektrisch leitfähigen Trägermaterials, der einen Elektrokatalysator trägt, mit einem anderen porösen, protonenleitenden Polymeren beladen ist als der Teil der Partikel ohne Elektrokatalysator.

21. Gasdiffusionselektrode nach Anspruch 20, wobei die Partikel des elektrisch leitfähigen Trägermaterials mit mindestens einem porösen, protonenleitenden Polymeren beladen sind, welches selbst katalytisch aktiv ist oder die katalytische Aktivität des Elektrokatalysators erhöht.

22. Gasdiffusionselektrode nach Anspruch 20, wobei das katalytisch aktive Polymer ausgewählt ist aus der Gruppe der Stickstoffatome enthaltenden Polymere, deren Stickstoffatome chemisch an Zentralatomen von mehrbasigen anorganischen Oxosäuren oder deren Derivaten gebunden sind.

23. Gasdiffusionselektroden nach Anspruch 1, wobei die Katalysatorschicht Additive enthält.

24. Gasdiffusionselektroden Anspruch 23, wobei die Additive ein Bindemittel oder sphärische Partikel auf Kohlenstoffbasis sind.

25. Verfahren zur Herstellung von Gasdiffusionselektroden mit mehreren gasdurchlässigen, elektrisch leitfähigen Schichten, die mindestens aus einer Gasdiffusionsschicht und einer Katalysatorschicht bestehen, wobei die Katalysatorschicht wenigstens Partikel eines elektrisch leitfähigen Trägermaterials aufweist, wobei wenigstens ein Teil der Partikel einen Elektrokatalysator trägt und wobei wenigstens ein Teil der Partikel mit wenigstens einem porösen, protonenleitenden Polymeren beladen ist und dieses Polymer bei Temperaturen bis 200 °C thermisch und mechanisch stabil ist, wobei als protonenleitende Polymere solche Polymere ausgewählt werden, die aus mindestens einem Stickstoffatome enthaltenden Polymer bestehen, deren Stickstoffatome chemisch an Zentralatome von mehrbasigen anorganischen Oxosäuren oder deren Derivaten gebunden sind, wobei als Stickstoffatome enthaltende Polymere solche Polymere verwendet werden, die ausgewählt werden aus der Gruppe umfassend Polybenzimidazol, Polypyrridin, Polypyrimidin, Polyimidazole, Polybenzthiazole, Polybenzoxazole, Polyoxadiazole, Polychinoxaline, Polythiadiazole, Poly(tetrazapyrene), oder wobei die Polymere zur Ausbildung von Amidbindungen befähigte reaktive Gruppen in der Seitenkette tragen oder primäre und sekundäre Aminogruppen aufweisen sowie eine Kombination von zwei oder mehreren davon oder mit anderen Polymeren und wobei folgende Schritte durchgeführt werden:
A) zumindest teilweises Beladen der Oberfläche von wenigstens dem einen Teil der Partikel des elektrisch leitfähigen Trägermaterials mit wenigstens dem einen protonenleitenden Polymer, indem die Partikel in einer Flüssigkeit suspendiert werden, in welcher das wenigstens eine protonenleitenden Polymer gelöst ist und sukzessives Eintragen der Suspension in ein bewegtes Nichtlösemittel für das Polymer zum Auslösen einer Phaseninversion unter Ausbilden einer porösen Polymerstruktur mit Porendurchmessern im Bereich von etwa 1nm bis 1µm an der Oberfläche der Partikel des Trägermaterials und von porösen Partikeln aus dem wenigstens einen protonenleitenden Polymer,
B) Bereitstellen mindestens des partikulären, elektrisch leitfähigen Trägermaterials für die Katalysatorschicht, bei dem wenigstens ein Teil der Partikel einen Elektrokatalysator trägt und wenigstens ein Teil der Partikel mit wenigstens dem porösen, protonenleitenden Polymeren gemäß Schritt A) beladen ist,
C) Ausformen der Katalysatorschicht in eine Elektrodenform und
D) Kontaktieren der ausgeformten Katalysatorschicht mit einer der Seiten der Gasdiffusionsschicht.

26. Verfahren nach Anspruch 25, wobei dem bereitgestellten Trägermaterial vor Durchführen von Schritt C) Additive hinzugefügt werden.

27. Verfahren nach Anspruch 26, wobei als Additive ein Bindemittel oder sphärische Partikel auf Kohlenstoffbasis hinzugefügt werden.

28. Verfahren nach Anspruch 25, wobei auf die Seite der Gasdiffusionsschicht, die mit der Katalysatorschicht in Kontakt gebracht werden wird, eine zusätzliche gasverteilende Mikrostrukturschicht aus elektrisch leitfähigen Partikeln aufgebracht wird.

29. Verfahren nach Anspruch 25, wobei vor dem Kontaktieren der Katalysatorschicht mit der einen Seite der Gasdiffusionsschicht die ausgeformte Katalysatorschicht zunächst auf wenigstens eine der Seiten einer Polymerelektrolytmembran aufgebracht wird.

30. Verfahren nach Anspruch 25, wobei das partikuläre, elektrisch leitfähige Trägermaterial für die Katalysatorschicht als Pulver bereitgestellt wird und das Ausformen der Katalysatorschicht in die Elektrodenform durch Walzen des Pulvers erfolgt.

31. Verfahren nach Anspruch 25 und 29, wobei das partikuläre, elektrisch leitfähige Trägermaterial für die Katalysatorschicht als Suspension oder Paste bereitgestellt wird und das Ausformen der Katalysatorschicht in die Elektrodenform durch Aufbringen der Suspension oder der Paste auf wenigstens eine Unterlage und anschließendem Trocknen erfolgt.

32. Verfahren nach Anspruch 31, wobei als Unterlage die Gasdiffusionsschicht oder eine Polymerelektrolytmembran verwendet wird.

33. Verfahren nach Anspruch 25, wobei Oxosäuren oder deren Derivate verwendet werden, deren Zentralatom aus Phosphor, Schwefel, Molybdän, Wolfram, Arsen, Antimon, Wismut, Selen, Germanium, Zinn, Blei, Bor, Chrom und/oder Silizium besteht.

34. Verfahren nach Anspruch 25, wobei als Derivate der Oxosäuren organische Derivate in Form von Alkoxyverbindungen, Estern, Amiden und Säurechloriden verwendet werden.

35. Verfahren nach Anspruch 34, wobei als organische Derivate der Oxosäuren 2-(Diethylhexyl)phosphat, Molybdaenyl-acetylacetonat und Tetraethoxysilan verwendet werden.

36. Verfahren nach einen der Ansprüche 1 und 33 bis 35, wobei das mindestens eine protonenleitende Polymer und das Oxosäurederivat durch Wärmeeinwirkung zu einem Netzwerk vernetzt werden.

37. Verfahren nach den Ansprüchen 25 bis 36, wobei das wenigstens eine protonenleitende Polymer in seiner Affinität gegenüber Wasser über Art und Anzahl hydrophiler und hydrophober Gruppen an den Polymeren und/oder an den Derivaten der Oxosäuren eingestellt wird.

38. Brennstoffzellen für den Betrieb bei Temperaturen bis mindestens 200 °C mit mindestens einer Membran-Elektroden-Einheit aus zwei Gasverteilungselektroden nach Anspruch 1 und einer sandwichartig dazwischen angeordneten Polymerelektrolytmembran.

39. Brennstoffzellen nach Anspruch 38, wobei die Gasdiffusionselektroden und die Polymerelektrolytmembranen der Membran-Elektroden-Einheiten das gleiche mindestens eine protonenleitende Polymer aufweisen.

## Claims

1. Gas diffusion electrodes with a plurality of gas-permeable, electrically conductive layers comprising at least one gas diffusion layer and one catalyst layer, wherein the catalyst layer has at least particles of an electrically conductive carrier material, wherein at least one part of the particles carries an electro-catalyst and wherein at least one part of the particles is loaded with at least one porous, proton-conducting polymer,
**characterised in that**
the at least one porous, proton-conducting polymer is made from a polymer containing at least one nitrogen atom, whose nitrogen atoms are chemically bonded to central atoms of polybasic, inorganic oxoacids or derivatives of these, wherein the nitrogen atom-containing polymer is selected from the group comprising polybenzimidazoles, poly-pyrridines, polypyrimidines, polyimidazoles, polybenzo-thiazoles, polybenzoxazoles, polyoxa-diazoles, poly-quinoxalines, polythiadiazoles, poly(tetrazapyrenes) or wherein the polymer carries reactive groups in the side chain capable of forming amide bonds or has primary and secondary amino groups, as well as a combination of two or more of these or with other polymers,
that the proton-conducting polymer layer has pore diameters in a range of approximately 1 nm to 1 µm and
that the proton-conducting polymer is thermally and mechanically stable at temperatures of up to 200 °C.

2. The gas diffusion electrodes according to claim 1, wherein the catalyst layer has porous particles from at least the one proton-conducting polymer.

3. The gas diffusion electrodes according to claim 1, wherein an additional gas-distributing microstructure layer of electrically conductive particles is inserted between the catalyst layer and the gas diffusion layer.

4. The gas diffusion electrodes according to claim 3, wherein the electrically conductive particles comprise carbon black.

5. The gas diffusion electrodes according to claim 1, wherein the gas diffusion layer comprises carbon.

6. The gas diffusion electrodes according to claim 5, wherein the gas diffusion layer is in the form of paper, non-woven materials, lattices, knitted fabrics or woven fabrics.

7. The gas diffusion electrodes according to claim 1, wherein the electrically conductive carrier material of the catalyst layer is selected from the group consisting of metals, metal oxides, metal carbides, carbons and mixtures thereof.

8. The gas diffusion electrodes according to claim 7, wherein carbon black is chosen from among the carbons.

9. The gas diffusion electrodes according to claim 1, wherein the electro-catalyst is selected from the group consisting of metals and metal alloys.

10. The gas diffusion electrodes according to claim 9, wherein the metals are selected from the 8th subgroup of the periodic table.

11. The gas diffusion electrodes according to claim 10, wherein the metals are platinum and/or ruthenium.

12. The gas diffusion electrodes according to claim 1, wherein the central atom of the oxoacids or their derivatives is phosphorus, sulphur, molybdenum, tungsten, arsenic, antimony, bismuth, selenium, germanium, tin, lead, boron, chromium and/or silicon.

13. The gas diffusion electrodes according to claim 12, wherein the derivatives of the oxoacids are organic derivatives in the form of alkoxy compounds, esters, amides and acid chlorides.

14. The gas diffusion electrodes according to claim 13, wherein the organic derivatives of the oxoacids are 2-(diethylhexyl) phosphate, molybdenyl acetyl acetonate, or tetraethoxysilane.

15. The gas diffusion electrodes according to claims 1 and 12 to 14, wherein the at least one proton-conducting polymer and the oxoacid derivative are cross-linked into a network.

16. The gas diffusion electrodes according to claim 1, wherein the at least one porous, proton-conducting polymer can be doped with inorganic acids.

17. The gas diffusion electrodes according to claim 16, wherein the doping agent is phosphoric acid.

18. The gas diffusion electrode according to one of the claims 1 and 12 to 17, wherein the at least one proton-conducting polymer has an adjustable affinity for water, which can be realised by means of the type and number of introducible hydrophilic and hydrophobic groups on the polymer and/or on the derivatives of the oxoacids.

19. The gas diffusion electrode according to claim 1, wherein the particles of the electrically conductive carrier material are loaded with different porous, proton-conducting polymers.

20. The gas diffusion electrode according to claim 1, wherein the part of the particles of the electrically conductive carrier material which carries an electro-catalyst is loaded with a different porous, proton-conducting polymer to the part of the particles without an electro-catalyst.

21. The gas diffusion electrode according to claim 20, wherein the particles of the electrically conductive carrier material are loaded with at least one porous, proton-conducting polymer, which is catalytically active itself or which increases the catalytic activity of the electro-catalyst.

22. The gas diffusion electrode according to claim 20, wherein the catalytically active polymer is selected from the group consisting of nitrogen atom-containing polymers whose nitrogen atoms are chemically bonded to central atoms of polybasic inorganic oxoacids or their derivatives.

23. The gas diffusion electrodes according to claim 1, wherein the catalyst layer contains additives.

24. The gas diffusion electrodes according to claim 23, wherein the additives are a binding agent or carbon-based spherical particles.

25. A method for producing gas diffusion electrodes with a plurality of gas-permeable, electrically conductive layers, which comprise at least one gas diffusion layer and one catalyst layer, wherein the catalyst layer has at least particles of an electrically conductive carrier material, wherein at least one part of the particles carries an electro-catalyst and wherein at least one part of the particles is loaded with at least one porous, proton-conducting polymer and this polymer is thermally and mechanically stable at temperatures of up to 200 °C, wherein polymers selected as proton-conducting polymers are those that comprise at least one nitrogen atom-containing polymer whose nitrogen atoms are chemically bonded to central atoms of polybasic, inorganic oxoacids or derivatives of these,
wherein polymers used as nitrogen atom-containing polymers are those selected from the group comprising polybenzimidazoles, polypyrridines, polypyrimidines, polyimidazoles, polybenzo-thiazoles, polybenzoxazoles, polyoxadiazoles, polyquinoxalines, polythiadiazoles, poly(tetraza-pyrenes) or wherein the polymers carry reactive groups in the side chain capable of forming amide bonds or have primary and secondary amino groups, as well as a combination of two or more of these or with other polymers and wherein the following steps are performed:
A) at least partially loading the surface of the at least one part of the particles of the electrically conductive carrier material with the at least one proton-conducting polymer by suspending the particles in a liquid in which the at least one proton-conducting polymer is dissolved and gradually adding the suspension to an agitated non-solvent for the polymer in order to initiate a phase inversion, thereby forming a porous polymer structure with a pore diameter range of roughly 1 nm to 1 µm on the surface of the particles of the carrier material and porous particles of the at least one proton-conducting polymer,
B) providing at least the electrically conductive particulate carrier material for the catalyst layer in which at least one part of the particles carries an electro-catalyst and at least one part of the particles is loaded with at least the porous, proton-conducting polymer according to step A),
C) forming the catalyst layer into an electrode form and
D) contacting the formed catalyst layer with one of the sides of the gas diffusion layer.

26. The method according to claim 25, wherein additives are added to the provided carrier material before step C) is performed.

27. The method according to claim 26, wherein the additives added comprise a binding agent or spherical carbon-based particles.

28. The method according to claim 25, wherein an additional gas-distributing microlayer structure layer of electrically conductive particles is applied to the side of the gas diffusion layer brought into contact with the catalyst layer.

29. The method according to claim 25, wherein, prior to contact being made between the catalyst layer and the one side of the gas diffusion layer, the formed catalyst layer is first applied to at least one side of a polymer electrolyte membrane.

30. The method according to claim 25, wherein the electrically conductive particulate carrier material for the catalyst layer is provided in the form of a powder and the catalyst layer is formed into the electrode form by rolling the powder.

31. The method according to claim 25 and 29, wherein the electrically conductive particulate carrier material for the catalyst layer is provided in the form of a suspension or paste and the catalyst layer is formed into the electrode form by applying the suspension or paste to at least one substrate and subsequently drying it.

32. The method according to claim 31, wherein the gas diffusion layer or a polymer electrolyte membrane is used as the substrate.

33. The method according to claim 25, wherein oxoacids or their derivatives are used, whose central atom comprises phosphorus, sulphur, molybdenum, tungsten, arsenic, antimony, bismuth, selenium, germanium, tin, lead, boron, chromium and/or silicon.

34. The method according to claim 25, wherein organic derivatives in the form of alkoxy compounds, esters, amides or acid chlorides are used as derivatives of oxoacids.

35. The method according to claim 34, wherein 2-(diethylhexyl) phosphate, molybdenyl acetyl acetonate or tetraethoxysilane are used as organic derivatives of the oxoacids.

36. The method according to one of the claims 1 and 33 to 35, wherein the at least one proton-conducting polymer and the oxoacid derivative are cross-linked into a network through the effect of heat.

37. The method according to claims 25 to 36, wherein the affinity for water of the at least one proton-conducting polymer is adjusted by means of the type and number of hydrophilic and hydrophobic groups on the polymers and/or on the derivatives of the oxoacids.

38. Fuel cells for operation at temperatures of up to at least 200 °C with at least one membrane electrode unit comprising two gas-distribution electrodes according to claim 1 and a polymer electrolyte membrane sandwiched between the two of them.

39. The fuel cells according to claim 38, wherein the gas diffusion electrodes and the polymer electrolyte membranes of the membrane electrode units have the same at least one proton-conducting polymer.

## Revendications

1. Electrodes à diffusion de gaz avec plusieurs couches perméables aux gaz et conductrices d'électricité constituées d'au moins une couche de diffusion de gaz et d'une couche catalytique, ladite couche catalytique comportant au moins des particules d'un matériau de support conducteur d'électricité, au moins une partie desdites particules portant un catalyseur électrique et au moins une partie desdites particules étant chargée avec au moins un polymère poreux conducteur de protons,
**caractérisées en ce que**
ledit au moins polymère poreux conducteur de protons est constitué d'au moins un polymère contenant des atomes d'azote dont lesdits atomes d'azote sont chimiquement liés à des atomes centraux d'oxacides inorganiques à plusieurs bases ou de leurs dérivés, ledit polymère contenant des atomes d'azote étant choisi dans le groupe comprenant les polybenzimidazoles, les polypyridines, les polypyrimidines, les polyimidazoles, les polybenzthiazoles, les polybenzoxazoles, les polyoxadiazoles, les polychinoxalines, les polythiadiazoles, les poly(tétrazapyrènes), ou ledit polymère portant, dans la chaîne latérale, des groupes réactifs capables de former des liaisons amide ou comportant des groupes amino primaires et secondaires, ainsi qu'une combinaison de deux ou plusieurs d'entre eux ou avec d'autres polymères,
la couche de polymère conductrice de protons présente des pores dont le diamètre est compris entre 1 nm et 1 µm et
ledit polymère conducteur de protons étant, à des températures inférieures ou égales à 200 °C, thermiquement et mécaniquement stable.

2. Electrodes à diffusion de gaz selon la revendication 1, ladite couche catalytique comportant des particules poreuses constituées dudit au moins un polymère conducteur de protons.

3. Electrodes à diffusion de gaz selon la revendication 1, une couche supplémentaire à microstructure répartitrice de gaz, constituée de particules conducteur d'électricité, étant disposée entre ladite couche catalytique et ladite couche de diffusion de gaz.

4. Electrodes à diffusion de gaz selon la revendication 3, lesdites particules conductrices d'électricité étant constituées de noir de carbone.

5. Electrodes à diffusion de gaz selon la revendication 1, ladite couche de diffusion de gaz étant constituée de carbone.

6. Electrodes à diffusion de gaz selon la revendication 5, ladite couche de diffusion de gaz ayant la forme d'un papier, d'un non-tissé, d'une grille, d'un tricot ou d'un tissu.

7. Electrodes à diffusion de gaz selon la revendication 1, ledit matériau de support de la couche catalytique étant choisi dans le groupe des métaux, des oxydes de métaux, des carbures de métaux, des carbones ou de leurs mélanges.

8. Electrodes à diffusion de gaz selon la revendication 7, le carbone choisi étant un noir de carbone.

9. Electrodes à diffusion de gaz selon la revendication 1, ledit catalyseur électrique étant choisi dans le groupe des métaux et alliages de métaux.

10. Electrodes à diffusion de gaz selon la revendication 9, lesdits métaux étant choisis dans le groupe VIII B du tableau périodique des éléments.

11. Electrodes à diffusion de gaz selon la revendication 10, lesdits métaux étant du platine et/ou du ruthénium.

12. Electrodes à diffusion de gaz selon la revendication 1, ledit atome central des oxacides ou de leurs dérivés étant du phosphore, du soufre, du molybdène, du tungstène, de l'arsenic, de l'antimoine, du bismuth, du sélénium, du germanium, de l'étain, du plomb, du bore, du chrome et/ou du silicium.

13. Electrodes à diffusion de gaz selon la revendication 12, lesdits dérivés des oxacides étant des dérivés organiques sous forme de composés alkoxy, d'esters, d'amides et de chlorures d'acide.

14. Electrodes à diffusion de gaz selon la revendication 13, lesdits dérivés organiques des oxacides étant le phosphate de diéthylhexyle, l'acétylacétonate de molybdényle et le tétraéthoxysilane.

15. Electrodes à diffusion de gaz selon l'une des revendications 1 et 12 à 14, ledit au moins un polymère conducteur de protons et ledit dérivé d'oxacide étant réticulés pour former un réseau.

16. Electrodes à diffusion de gaz selon la revendication 1, ledit au moins un polymère poreux conducteur de protons pouvant être dopé avec des acides inorganiques.

17. Electrodes à diffusion de gaz selon la revendication 16, l'agent de dopage étant de l'acide phosphorique.

18. Electrode à diffusion de gaz selon l'une des revendications 1 et 12 à 17, ledit au moins un polymère conducteur de protons présentant une affinité ajustable vis-à-vis de l'eau, qui peut être réalisée à travers la nature et le nombre de groupes hydrophiles et hydrophobes pouvant être introduits dans lesdits polymères et/ou dans lesdits dérivés des oxacides.

19. Electrode à diffusion de gaz selon la revendication 1, lesdites particules dudit matériau de support conducteur d'électricité étant chargées avec différents polymères poreux conducteurs de protons.

20. Electrode à diffusion de gaz selon la revendication 1, ladite partie des particules du matériau de support conducteur d'électricité qui porte un catalyseur électrique étant chargée avec un autre polymère poreux conducteur de protons que la partie des particules sans catalyseur électrique.

21. Electrode à diffusion de gaz selon la revendication 20, lesdites particules du matériau de support étant chargées avec un polymère poreux conducteur de protons qui lui-même présente une activité catalytique ou qui augmente l'activité catalytique dudit catalyseur électrique.

22. Electrode à diffusion de gaz selon la revendication 20, ledit polymère à activité catalytique étant choisi dans le groupe des polymères contenant des atomes d'azote dont lesdits atomes d'azote sont chimiquement liés à des atomes centraux d'oxacides inorganiques à plusieurs bases ou de leurs dérivés.

23. Electrodes à diffusion de gaz selon la revendication 1, ladite couche catalytique contenant des additifs.

24. Electrodes à diffusion de gaz selon la revendication 23, lesdits additifs étant un liant ou des particules sphériques à base de carbone.

25. Procédé de fabrication d'électrodes à diffusion de gaz avec plusieurs couches perméables aux gaz et conductrices d'électricité constituées d'au moins une couche de diffusion de gaz et d'une couche catalytique, ladite couche catalytique comportant au moins des particules d'un matériau de support conducteur d'électricité, au moins une partie desdites particules portant un catalyseur électrique et au moins une partie desdites particules étant chargée avec au moins un polymère poreux conducteur de protons, ledit polymère étant, à des températures inférieures ou égales à 200 °C, thermiquement et mécaniquement stable, lesdits polymères conducteur de protons choisis étant des polymères constitués d'au moins un polymère contenant des atomes d'azote dont lesdits atomes d'azote sont chimiquement liés à des atomes centraux d'oxacides inorganiques à plusieurs bases ou de leurs dérivés, les polymères utilisés en tant que polymères contenant des atomes d'azote étant choisis dans le groupe comprenant le polybenzimidazole, la polypyridine, la polypyrimidine, les polyimidazoles, les polybenzthiazoles, les polybenzoxazoles, les polyoxadiazoles, les polychinoxalines, les polythiadiazoles, les poly(tétrazapyrènes), ou lesdits polymères portant, dans la chaîne latérale, des groupes réactifs capables de former des liaisons amide ou comportant des groupes amino primaires et secondaires, ainsi qu'une combinaison de deux ou plusieurs d'entre eux ou avec d'autres polymères, et consistant à réaliser les étapes suivantes :
A) chargement au moins partiel de la surface au moins de ladite une partie des particules du matériau de support conducteur d'électricité avec ledit au moins un polymère conducteur de protons, en mettant lesdites particules en suspension dans un liquide dans lequel ledit polymère conducteur de protons est dissous et, successivement, introduction de ladite suspension dans un agent agité dans lequel le polymère est insoluble pour ainsi déclencher une inversion des phases associée à la formation, à la surface des particules du matériau support, d'une structure polymère poreuse dont les pores présentent un diamètre compris entre 1 nm et 1 µm et de particules poreuses à partir dudit au moins un polymère conducteur de protons.
B) mise à disposition pour ladite couche catalytique au moins du matériau de support conducteur d'électricité sous forme de particules dont au moins une partie des particules porte un catalyseur électrique et dont au moins une partie des particules est chargée au moins avec les polymères poreux conducteurs de protons selon l'étape A),
C) mise en forme de ladite couche catalytique dans une forme d'électrode et
D) mise en contact de ladite couche catalytique formée avec l'une des faces de ladite couche de diffusion de gaz.

26. Procédé selon la revendication 25, ledit matériau de support mis à disposition étant enrichi d'additifs avant la réalisation de l'étape C).

27. Procédé selon la revendication 26, lesdits additifs ajoutés étant un liant ou des particules sphériques à base de carbone.

28. Procédé selon la revendication 25, une couche supplémentaire à microstructure répartitrice de gaz, constituée de particules conducteur d'électricité, étant appliquée sur la face de ladite couche de diffusion de gaz qui est mise en contact avec ladite couche catalytique.

29. Procédé selon la revendication 25, ladite couche catalytique formée étant appliquée sur au moins une des faces d'une membrane électrolytique polymère avant d'être mise en contact avec l'une des faces de ladite couche de diffusion de gaz.

30. Procédé selon la revendication 25, ledit matériau de support conducteur d'électricité sous forme de particules, qui est destiné à ladite couche catalytique, étant mis à disposition sous forme d'une poudre et la mise en forme de couche catalytique étant réalisée par laminage de ladite poudre pour ainsi créer ladite forme d'électrode.

31. Procédé selon les revendications 25 et 29, ledit matériau de support conducteur d'électricité en forme de particules, qui est destiné à ladite couche catalytique, étant mis à disposition sous forme d'une suspension ou d'une pâte et la mise en forme de la couche catalytique étant réalisée en appliquant ladite suspension ou ladite pâte sur au moins un support, puis en la faisant sécher.

32. Procédé selon la revendication 31, ladite couche de diffusion de gaz ou une membrane électrolytique polymère étant utilisées en tant que support.

33. Procédé selon la revendication 25, ledit atome central des oxacides ou de leurs dérivés utilisés étant choisi parmi le phosphore, le soufre, le molybdène, le tungstène, l'arsenic, l'antimoine, le bismuth, le sélénium, le germanium, l'étain, le plomb, le bore, le chrome et/ou le silicium.

34. Procédé selon la revendication 25, lesdits dérivés des oxacides utilisés étant des dérivés organiques sous forme de composés alkoxy, d'esters, d'amides et de chlorures d'acide.

35. Procédé selon la revendication 34, lesdits dérivés organiques des oxacides utilisés étant le phosphate de diéthylhexyle, l'acétylacétonate de molybdényle et le tétraéthoxysilane.

36. Procédé selon l'une des revendications 1 et 33 à 35, ledit au moins un polymère conducteur de protons et ledit dérivé d'oxacide étant réticulés sous l'effet de la chaleur pour ainsi former un réseau.

37. Procédé selon les revendications 25 à 36, l'affinité dudit au moins un polymère conducteur de protons vis-à-vis de l'eau étant ajustée à travers la nature et le nombre de groupes hydrophiles et hydrophobes dans lesdits polymères et/ou dans lesdits dérivés des oxacides.

38. Piles à combustible pour un fonctionnement à des températures pouvant atteindre au moins 200 °C, avec au moins une unité membrane-électrode constituée de deux électrodes à diffusion de gaz selon la revendication 1 et d'une membrane électrolytique polymère disposée en sandwich entre ces dernières.

39. Piles à combustible selon la revendication 38, lesdites électrodes à diffusion de gaz et lesdites membranes électrolytiques polymères desdites unités membrane-électrode comportant le même au moins un polymère conducteur de protons.
